# EUROPÄISCHE PATENTSCHRIFT

(11) **EP 0 860 625 B1**
(45) Veröffentlichungstag und Bekanntmachung des Hinweises auf die Patenterteilung: **27.03.2002**
(21) Anmeldenummer: 97121839.1
(22) Anmeldetag: 11.12.1997
(51) Int. Cl.: F16D 48/06

(54) **Verfahren zur Steuerung des Motorbremsbetriebes eines Kraftfahrzeugs**
Control method for engine braking in vehicles with an automatic clutch
Système de régulation du frein moteur des véhicules avec un embrayage automatique

(30) Priorität: 22.02.1997 DE 19707140
(43) Veröffentlichungstag der Anmeldung: 26.08.1998
(73) Patentinhaber: Volkswagen Aktiengesellschaft, 38436 Wolfsburg (DE)
(72) Erfinder: Rüdiger, Reinhard, Dipl.-Ing., 31226 Peine (DE)

(56) Entgegenhaltungen:
- DE-A- 3 151 087
- DE-A- 3 208 715
- DE-A- 19 507 622
- DE-A- 19 652 244

## Beschreibung

Die Erfindung betrifft ein Verfahren zur Steuerung des Motorbremsbetriebes eines Kraftfahrzeuges mit einer automatisierten Kupplung im Antriebsstrang zwischen einem Antriebsaggregat und einem Getriebe sowie eine Vorrichtung zur Steuerung des Motorbremsbetriebes eines Kraftfahrzeuges, wobei die Vorrichtung zur Steuerung einer automatisierten kupplung im Antriebsstrang zwischen einem Antriebsaggregat und einem Getriebe verwendet wird.

Bei einem Fahrzeug mit automatisierter Kupplung, einem immer laufenden Antriebsaggregat und Freilaufbetrieb wird die Kupplung im Freilaufbetrieb normalerweise im Schubbetrieb nicht geschlossen um ein Abbremsen des Fahrzeuges zu vermeiden (Freilaufbetrieb). Soll das Fahrzeug dennoch abgebremst werden, tritt der Fahrer je nach Stärke des Bremsvorgangs die Bremse.

Um zusätzlich einen Motorbremsbetrieb wirksam zu machen ist es beispielsweise aus der DE-A1-195 07 622 bekannt, die automatisierte Kupplung immer dann zu schließen, wenn der Fahrer das Bremspedal betätigt. Ferner ist es bekannt, einen Schalter vorzusehen, mit dem der Fahrer manuell am Lenkstockhebel den Motorbremsbetrieb wählen kann.

Vor allem bei Fahrstrecken in vorwiegend hügeligem Gelände ist diese Lösung nicht zufriedenstellend, da der Fahrer, wenn er optimal fahren wollte, ständig den Brems-/Freilaufmodus manuell per Taste wechseln muß. Die meisten Fahrer entscheiden sich in diesen Fällen bald für den weniger optimalen Motorbremsbetrieb.

Der vorliegenden Erfindung liegt daher die Aufgabe zugrunde, ein Verfahren und eine Vorrichtung der ebengenannten Art zur Verfügung zu stellen, wobei die obengenannten Nachteile überwunden werden und ein verbesserter Fahkomfort erzielt wird.

Diese Aufgabe wird erfindungsgemäß durch ein Verfahren der o.g. Art mit den in Anspruch 1 angegebenen Schritten und durch eine Vorrichtung der o.g. Art mit den in Anspruch 9 angegebenen Merkmalen gelöst.

Dazu sind bei einem erfindungsgemäßen Verfahren folgende Schritte vorgesehen:
(a) Feststellen ob eine Bremseinrichtung des Kraftfahrzeuges betätigt wird,
(b) Feststellen ob die auf das Kraftfahrzeug wirkende Beschleunigung kleiner oder gleich null ist,
(c) Inkrementieren eines Zählers um ein vorbestimmtes Inkrement, wenn das Ergebnis von (a) und (b) positiv ist oder Dekrementieren eines Zählers um ein vorbestimmtes Dekrement, wenn das Ergebnis von (a) negativ ist,
(d) Vergleichen des Zählerstandes mit einem vorbestimmten Entscheidungswert, und
(e) Abgeben eines Kupplungs-Schließsignals oder Schließen der automatisierten Kupplung, wenn der Zählerstand den vorbestimmten Entscheidungswert erreicht oder überschreitet, oder
   Abgeben eines Kupplungs-Öffnungssignals oder Öffnen der automatisierten Kupplung, wenn der Zählerstand den vorbestimmten Entscheidungswert unterschreitet

Dies hat den Vorteil, daß neben der Komfortsteigerung die Sicherheit erhöht wird, da sich die Bremsen nicht mehr so stark abnutzen.

Zur optimalen Anpassung an verschiedenste Zustände des Kraftfahrzeuges wird in Schritt (c) alternativ auch dann der Zähler um ein vorbestimmtes Dekrement dekrementiert, wenn das Ergebnis von (b) negativ ist.

Eine ständige Überwachung des Fahrzustands und entsprechendes Öffnen oder Schließen der Kupplung erzielt man dadurch, daß die Schritte (a) bis (e) zyklisch wiederholt werden.

In vorteilhafter Weise zählt der Zähler zeitgetaktet. Dies ist eine besonders bevorzugte Basis für den Zählertakt.

Um in unterschiedlichen Bremssituationen mit entsprechendem Ein- oder Auskuppeln einen jeweils optimalen Betriebszustand möglichst rasch zu erzielen, ist das vorbestimmte Inkrement für den Zustand Bremsbetätigung mit Verzögerung gleich oder anders, als im Zustand Bremsbetätigung ohne Verzögerung.

Dabei ist es besonders bevorzugt, wenn das vorbestimmte Inkrement für den Zustand Bremsbetätigung mit Verzögerung kleiner ist, als im Zustand Bremsbetätigung ohne Verzögerung.

In vorteilhafter Weise ist der vorbestimmte Entscheidungswert und/oder das vorbestimmte Dekrement und/oder das vorbestimmte Inkrement geschwindigkeitsabhängig und/oder gangabhängig und/oder bremsdruckabhängig und/oder getriebewelleneingangsdrehzahlabhängig variabel.

Besonders bevorzugt ist dabei der vorbestimmte Entscheidungswert und/oder das vorbestimmte Dekrement und/oder das vorbestimmte Inkrement bei höheren Geschwindigkeiten, Gängen, Bremsdrücken und/oder Getriebewellendrehzahlen höher, gleich oder niedriger als bei niedrigeren Geschwindigkeiten, Gängen, Bremsdrücken und/oder Getriebewellendrehzahlen.

Bei einer Vorrichtung der o.g. Art ist es zur Lösung der Aufgabe vorgesehen, daß die Vorrichtung einen Zähler aufweist, welcher in Abhängigkeit vom jeweiligen Betriebszustand des Kraftfahrzeuges um ein vorbestimmtes Inkrement inkrementierend oder um ein vorbestimmtes Dekrement dekrementierend zählt, wobei die Vorrichtung ein Schließen der automatisierten Kupplung veranlaßt, wenn der Zähler einen vorbestimmten Entscheidungswert erreicht oder überschreitet, oder ein Öffnen der automatisierten Kupplung veranlaßt, wenn der Zähler einen vorbestimmten Entscheidungswert unterschreitet

In vorteilhafter Weise zählt dabei der Zähler inkrementierend, wenn der Betriebszustand des Kraftfahrzeuges derart ist, daß eine Bremsbetätigung mit oder ohne Verzögerung erfolgt.

Weitere Merkmale, Vorteile und vorteilhafte Ausgestaltungen der Erfindung ergeben sich aus den abhängigen Ansprüchen, sowie aus der nachstehenden Beschreibung der Erfindung in den beigefügten Zeichnungen. Diese zeigen in
- Fig. 1: ein Prinzipschema eines Liniendiagramms für ein Beispiel eines Zählerstandes über die Zeit, und
- Fig. 2: ein Prinzipschema analog der Darstellung von Figur 1, mit anderen Parametern bei einer höheren Geschwindigkeit.

Eine automatische oder temporäre Wahl des Motorbremsbetriebes gemäß der vorliegenden Erfindung erleichtert dem Fahrer die Bedienung des Kraftfahrzeuges. Bremst der Fahrer das Fahrzeug ab, wird die Zeit der Bremsung und die dabei auftretende Verzögerung mitlels eines Inkrement-/Dekrementzählers ausgewertet. Dabei sind zwei Fälle zu unterscheiden:
1. Ist bei betätigter Bremse die Verzögerung kleiner gleich Null, so befindet sich das Fahrzeug auf einer Bergabstrecke. Der Fahrer bremst um die Geschwindigkeit zu halten oder nur vorsichtig zu erhöhen.
2. Ist die Verzögerung bei betätigter Bremse positiv, kann sich der Fahrer auf einer beliebigen Strecke in irgendeiner Situation befinden. Der Bremsbetätigung kann kein eindeutiger Grund zugeordnet werden, der für die Frage eines eventuell zusätzlichen Motorbremsbetriebes relevant wäre.

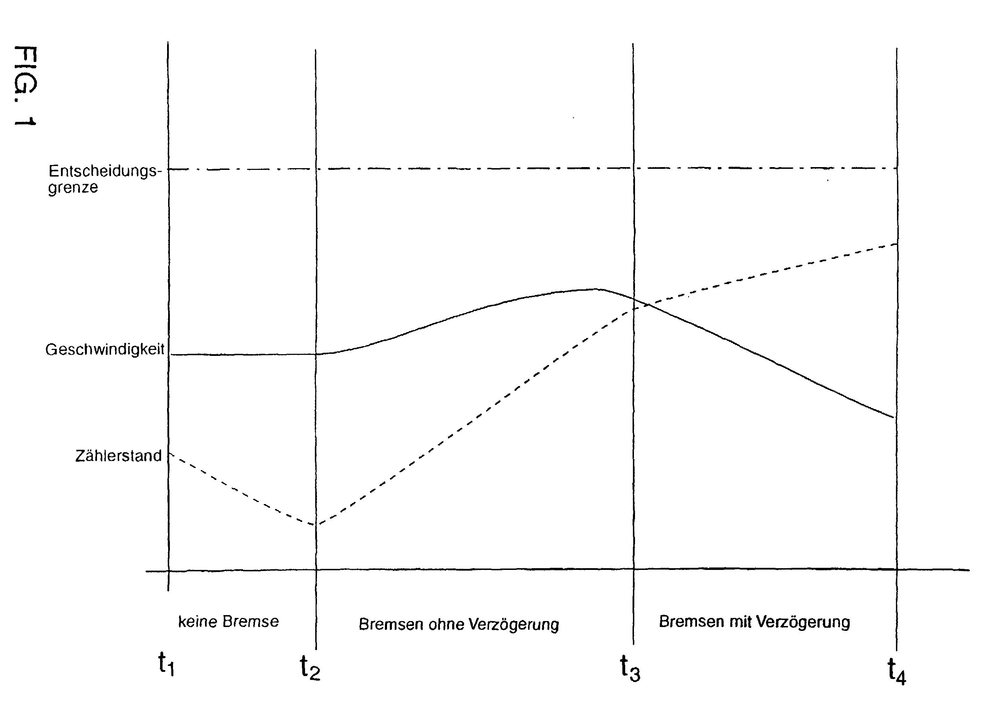

Grundlage der Entscheidung zum Einschalten der Motorbremse, d.h. zum Schließen der automatischen Kupplung ist ein Zähler. Dieser Zähler wird beim Bremsen nach Fall 1 und Fall 2 mit optional unterschiedlichen Inkrementen bis zu einem Maximalwert erhöht Wird nicht gebremst, so wird der Zähler bis zu einem Minimalwert dekrementiert. Dies ist beispielhaft für eine beliebige Zeitspanne Delta T_{A} = t₄-t₁ in Figur 1 dargestellt.

Im Zeitintervall t₁,t₂ erfolgt keine Bremsbetätigung und der Zähler wird entsprechend heruntergezählt. Im Intervall t₂,t₃ wird die Bremse betätigt, es erhöht sich jedoch die Geschwindigkeit. Dies führt zum schnellen Hochzählen des Zählers, da diese Situation, sofern sie länger anhält, eine zusätzliche Motorbremsung, d.h. ein Schließen der automatisierten Kupplung erfordert. Im Intervall t₃,t₄ erfolgt schließlich eine Reduzierung der Geschwindigkeit bei betätigter Bremse und der Zähler wird weiter hochgezählt. Dies erfolgt jedoch nunmehr langsamer. In Figur 1 erreicht dabei der Zähler nicht die Entscheidungsgrenze, so daß die automatisierte Kupplung nicht geschlossen und kein Motorbremsbetrieb initialisiert wird.

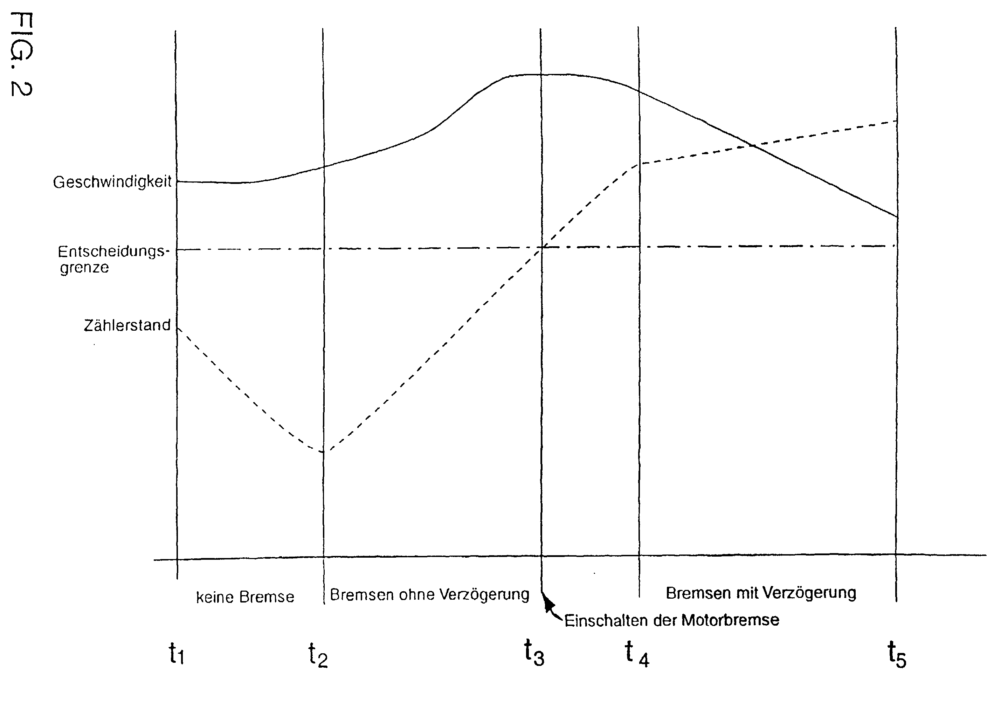

In Figur 2 ist dagegen ein anderes Zeitintervall DeltaT_{B} = t₅-t₁ dargestellt. Im Zeitintervall t₁,t₂ erfolgt wieder kein Bremsen und der Zähler wird dekrementiert. Im Zeitintervall t₂,t₃ erfolgt eine Bremsbetätigung mit weiter zunehmender Geschwindigkeit, so daß der Zähler schnell Inkrementiert wird. Femer ist die Absolutgeschwindigkeit höher als im Beispiel gemäß Figur 1. Das führt zu einer noch stärkeren Inkrementierung des Zählers und der Zählerstand überschreitet in diesem Intervall t₂,t₃ die Entscheidungsgrenze. Es wird daraufhin zum Zeitpunkt t₃ die Motorbremse durch Schließen der automatisierten Kupplung eingeschaltet. von t₃ bis t₅ erfolgt ein weiteres bremsen, jedoch ab t₄ mit abnehmender Geschwindigkeit. Daher erfolgt das Inkrementieren des Zähler im Intervall t₄,t₅ mit kleinerem Inkrement.

Die Inkremente und Dekremente können in den jeweiligen Fällen abhängig sein von der Geschwindigkeit das Fahrzeugs, der Gangwahl, der Drehzahl der Getriebeeingangswelle oder dem Bremsdruck. Wird die Entscheidungsgrenze vom Zählerstand überschritten, so wird die Motorbremse nach den bisher bekannten Verfahren zugeschaltet. Bei Geschwindigkeiten und dazu passender Gangwahl (oder Getriebeeingangswellendrehzahl) unterhalb derer der Motor nicht mehr wirksam mitbremsen kann, wird der Zähler zurückgesetzt

Neben der Komfortsteigerung (der Fahrer muß keinen Schalter mehr manuell für den Motorbremsbetrieb bedienen) erhält man auf diese Art und Weise auch eine Erhöhung der Sicherheit, denn die Bremsen werden weniger stark beansprucht als bei bisherigen Systemen und der Fahrer muß auch nicht mehr den ansonsten selten benutzen Schalter zum manuellen Einschalten der Motorbremse suchen, sondern kann sich voll auf das Fahren konzentrieren. Schließlich entfallen auch noch die Herstell- und Montagekosten für den bisher eingesetzten Schalter.

Zusammengefaßt betrifft die vorliegende Erfindung ein Verfahren und eine Vorrichtung zur Steuerung des Motorbremsbetriebes eines Kraftfahrzeuges mit einer automatisierter Kupplung im Antriebsstrang zwischen einem Antriebsaggregat und einem Getriebe. Dabei wird mittels eines Inkrement-/Dekrement-Zählers eine Bremssituation entsprechend ausgewertet und nach vorbestimmten Parametern je nach Zählerstand für einen Motorbremsbetrieb eine automatisierte Kupplung geschlossen.

## Patentansprüche

1. Verfahren zur Steuerung des Motorbremsbetriebes eines Kraftfahrzeuges mit einer automatisierten Kupplung im Antriebsstrang zwischen einem Antriebsaggregat und einem Getriebe,
**gekennzeichnet durch** folgende Schritte,
(a) Feststellen ob eine Bremseinrichtung des Kraftfahrzeuges betätigt wird,
(b) Feststellen ob die auf das Kraftfahrzeug wirkende Beschleunigung kleiner oder gleich Null ist,
(c) Inkrementieren eines Zählers um ein vorbestimmtes Inkrement, wenn das Ergebnis von (a) und (b) positiv ist oder Dekrementieren eines Zählers um ein vorbestimmtes Dekrement, wenn das Ergebnis von (a) negativ ist,
(d) Vergleichen des Zählerstandes mit einem vorbestimmten Entscheidungswert, und
(e) Abgeben eines Kupplungs-Schließsignals oder Schließen der automatisierten Kupplung, wenn der Zählerstand den vorbestimmten Entscheidungswert erreicht oder überschreitet, oder
Abgeben eines Kupplungs-Öffnungssignals oder Öffnen der automatisierten Kupplung, wenn der Zählerstand den vorbestimmten Entscheidungswert unterschreitet.

2. Verfahren nach Anspruch 1,
**dadurch gekennzeichnet, daß**
in Schritt (c) alternativ auch dann der Zähler um ein vorbestimmtes Dekrement dekrementiert wird, wenn das Ergebnis von (b) negativ ist

3. Verfahren nach Anspruch 1 oder 2,
**dadurch gekennzeichnet, daß**
die Schritte (a) bis (e) zyklisch wiederholt werden.

4. Verfahren nach wenigstens einem der vorstehenden Ansprüche,
**dadurch gekennzeichnet, daß**
der Zähler zeitgetaktet zählt.

5. Verfahren nach wenigstens einem der vorstehenden Ansprüche,
**dadurch gekennzeichnet, daß**
das vorbestimmte Inkrement für den Zustand Bremsbetätigung mit Verzögerung gleich oder anders ist, als im Zustand Bremsbetätigung ohne Verzögerung.

6. Verfahren nach Anspruch 5,
**dadurch gekennzeichnet, daß**
das vorbestimmte Inkrement für den Zustand Bremsbetätigung mit Verzögerung kleiner ist, als im Zustand Bremsbetätigung ohne Verzögerung.

7. Verfahren nach wenigstens einem der vorstehenden Ansprüche,
**dadurch gekennzeichnet, daß**
der vorbestimmte Entscheidungswert und/oder das vorbestimmte Dekrement und/oder das vorbestimmte Inkrement geschwindigkeitsabhängig und/oder gangabhängig und/oder bremsdruckabhängig und/oder getriebewelleneingangsdrehzahlabhängig variabel ist.

8. Verfahren nach wenigstens einem der vorstehenden Ansprüche,
**dadurch gekennzeichnet, daß**
der vorbestimmte Entscheidungswert und/oder das vorbestimmte Dekrement und/oder das vorbestimmte Inkrement bei höheren Geschwindigkeiten, Gängen, Bremsdrücken und/oder Getriebewellendrehzahlen höher, gleich oder niedriger als bei niedrigeren Geschwindigkeiten, Gängen, Bremsdrücken und/oder Getriebewellendrehzahlen ist.

9. Vorrichtung zur Steuerung des Motorbremsbetriebes eines Kraftfahrzeuges, wobei die Vorrichtung zur Steuerung einer automatisierten Kupplung im Antriebsstrang zwischen einem Antriebsaggregat und einem Getriebe verwendet wird,
**dadurch gekennzeichnet, daß**
die Vorrichtung einen Zähler aufweist, welcher in Abhängigkeit vom jeweiligen Betriebszustand des Kraftfahrzeuges um ein vorbestimmtes Inkrement inkrementierend oder um ein vorbestimmtes Dekrement dekrementierend zählt, wobei die Vorrichtung ein Schließen der automatisierten Kupplung veranlaßt, wenn der Zähler einen vorbestimmten Entscheidungswert erreicht oder überschreitet, oder ein Öffnen der automatisierten Kupplung veranlaßt, wenn der Zähler einen vorbestimmten Entscheidungswert unterschreitet.

10. Vorrichtung nach Anspruch 9,
**dadurch gekennzeichnet, daß**
der Zähler ein zeitgetakteter Zähler ist.

11. Vorrichtung nach Anspruch 9 oder 10,
**dadurch gekennzeichnet, daß**
der Zähler inkrementierend zählt, wenn der Betriebszustand des Kraftfahrzeuges derart ist, daß eine Bremsbetätigung mit oder ohne Verzögerung erfolgt.

12. Vorrichtung nach Anspruch 11,
**dadurch gekennzeichnet, daß**
das vorbestimmte Inkrement für den Zustand Bremsbetätigung mit Verzögerung gleich oder anders ist, als im Zustand Bremsbetätigung ohne Verzögerung.

13. Vorrichtung nach Anspruch 11 oder 12,
**dadurch gekennzeichnet, daß**
das vorbestimmte Inkrement für den Zustand Bremsbetätigung mit Verzögerung kleiner ist, als im Zustand Bremsbetätigung ohne Verzögerung.

14. Vorrichtung nach wenigstens einem der Ansprüche 9 bis 13,
**dadurch gekennzeichnet, daß**
der vorbestimmte Entscheidungswert und/oder das vorbestimmte Dekrement und/oder das vorbestimmte Inkrement geschwindigkeitsabhängig und/oder gangabhängig und/oder bremsdruckabhängig und/oder getriebewelleneingangsdrehzahlabhängig variabel ist.

15. Vorrichtung nach wenigstens einem der Ansprüche 9 bis 14,
**dadurch gekennzeichnet, daß**
der vorbestimmte Entscheidungswert und/oder das vorbestimmte Dekrement und/oder das vorbestimmte Inkrement bei höheren Geschwindigkeiten, Gängen, Bremsdrücken und/oder Getriebewellendrehzahlen höher, gleich oder niedriger als bei niedrigeren Geschwindigkeiten, Gängen, Bremsdrücken und/oder GetriebewelIendrehzahlen ist.

## Claims

1. Method for controlling the engine braking mode of a motor vehicle with an automated clutch in the drive train between a drive unit and a gearbox, **characterized by** the following steps:
(a) detecting whether a braking device of the motor vehicle is being actuated,
(b) detecting whether the acceleration acting on the vehicle is less than or equal to zero,
(c) incrementing a counter by a predetermined increment if the result of (a) and (b) is positive or decrementing a counter by a predetermined decrement if the result of (a) is negative,
(d) comparing the count with a predetermined decision value, and
(e) emitting a clutch-closing signal or closing the automated clutch if the count reaches or exceeds the predetermined decision value, or
emitting a clutch-opening signal or opening the automated clutch if the count falls below the predetermined decision value.

2. Method according to Claim 1, **characterized in that**, as an alternative, the counter is also decremented by a predetermined decrement in step (c) if the result of (b) is negative.

3. Method according to Claim 1 or 2, **characterized in that** steps (a) to (e) are repeated cyclically.

4. Method according to at least one of the preceding claims, **characterized in that** the counter counts in a clocked manner.

5. Method according to at least one of the preceding claims, **characterized in that** the predetermined increment for the state of brake actuation with deceleration is the same as or different from that in the state of brake actuation without deceleration.

6. Method according to Claim 5, **characterized in that** the predetermined increment for the state of brake actuation with deceleration is smaller than in the state of brake actuation without deceleration.

7. Method according to at least one of the preceding claims, **characterized in that** the predetermined decision value and/or the predetermined decrement and/or the predetermined increment can be varied as a function of the speed and/or as a function of the gear and/or as a function of the brake pressure and/or as a function of the speed of the gearbox input shaft.

8. Method according to at least one of the preceding claims, **characterized in that** the predetermined decision value and/or the predetermined decrement and/or the predetermined increment at higher speeds, in higher gears, at higher brake pressures and/or at higher speeds of the gearbox shaft is larger than, equal to or smaller than that at lower speeds, in lower gears, at lower brake pressures and/or at lower speeds of the gearbox shaft.

9. Device for controlling the engine braking mode of a motor vehicle, the device being used to control an automated clutch in the drive train between a drive unit and a gearbox, **characterized in that** the device has a counter that increments the count by a predetermined increment or decrements the count by a predetermined decrement as a function of the respective operating state of the motor vehicle, the device bringing about closure of the automated clutch if the counter reaches or exceeds a predetermined decision value or bringing about opening of the automated clutch if the counter falls below a predetermined decision value.

10. Device according to Claim 9, **characterized in that** the counter is a clocked counter.

11. Device according to Claim 9 or 10, **characterized in that** the counter counts in increments if the operating state of the motor vehicle is such that brake actuation is taking place with or without deceleration.

12. Device according to Claim 11, **characterized in that** the predetermined increment for the state of brake actuation with deceleration is the same as or different from that in the state of brake actuation without deceleration.

13. Device according to Claim 11 or 12, **characterized in that** the predetermined increment for the state of brake actuation with deceleration is smaller than in the state of brake actuation without deceleration.

14. Device according to at least one of Claims 9 to 13, **characterized in that** the predetermined decision value and/or the predetermined decrement and/or the predetermined increment can be varied as a function of the speed and/or as a function of the gear and/or as a function of the brake pressure and/or as a function of the speed of the gearbox input shaft.

15. Device according to at least one of Claims 9 to 14, **characterized in that** the predetermined decision value and/or the predetermined decrement and/or the predetermined increment at higher speeds, in higher gears, at higher brake pressures and/or at higher speeds of the gearbox shaft is larger than, equal to or smaller than that at lower speeds, in lower gears, at lower brake pressures and/or at lower speeds of the gearbox shaft.

## Revendications

1. Procédé de régulation du frein moteur d'un véhicule avec un embrayage automatique dans la ligne de transmission entre un ensemble moteur et une boîte de vitesses, **caractérisé par** les étapes suivantes:
(a) détecter si un équipement de freinage du véhicule est actionné,
(b) détecter si l'accélération agissant sur le véhicule est inférieure ou égale à zéro,
(c) augmenter un compteur d'un incrément prédéterminé lorsque le résultat de (a) et (b) est positif, ou diminuer un compteur d'un décrément prédéterminé lorsque le résultat de (a) est négatif,
(d) comparer l'état du compteur avec un seuil de décision prédéterminé, et
(e) émettre un signal de fermeture de l'embrayage ou fermer l'embrayage automatique, lorsque l'état du compteur atteint ou dépasse le seuil de décision prédéterminé, ou
émettre un signal d'ouverture de l'embrayage ou ouvrir l'embrayage automatique, lorsque l'état du compteur descend en dessous du seuil de décision prédéterminé.

2. Procédé suivant la revendication 1, **caractérisé en ce qu'**en alternative dans l'étape (c), on diminue le compteur d'un décrément prédéterminé également lorsque le résultat de (b) est négatif.

3. Procédé suivant la revendication 1 ou 2, **caractérisé en ce que** les étapes (a) à (e) sont répétées de manière cyclique.

4. Procédé suivant au moins une des revendications précédentes, **caractérisé en ce que** le compteur compte à une cadence temporelle.

5. Procédé suivant au moins une des revendications précédentes, **caractérisé en ce que** l'incrément prédéterminé pour l'état de commande des freins avec décélération est égal à ou différent de celui pour l'état de commande des freins sans décélération.

6. Procédé suivant la revendication 5, **caractérisé en ce que** l'incrément prédéterminé pour l'état de commande des freins avec décélération est inférieur à celui pour l'état de commande des freins sans décélération.

7. Procédé suivant au moins une des revendications précédentes, **caractérisé en ce que** le seuil de décision prédéterminé et/ou le décrément prédéterminé et/ou l'incrément prédéterminé est variable en fonction de la vitesse et/ou en fonction du rapport et/ou en fonction de la pression des freins et/ou en fonction de la vitesse de rotation d'entrée de l'arbre de transmission.

8. Procédé suivant au moins une des revendications précédentes, **caractérisé en ce que** le seuil de décision prédéterminé et/ou le décrément prédéterminé et/ou l'incrément prédéterminé est plus élevé, égal ou plus bas pour des vitesses, des rapports, des pressions de freinage et/ou des vitesses de rotation de l'arbre de transmission plus élevé(e)s que pour des vitesses, des rapports, des pressions de freinage et/ou des vitesses de rotation de l'arbre de transmission plus bas(ses).

9. Dispositif de régulation du frein moteur d'un véhicule, dans lequel le dispositif est utilisé pour la régulation d'un embrayage automatique dans la ligne de transmission entre un ensemble moteur et une boîte de vitesses, **caractérisé en ce que** le dispositif présente un compteur, qui compte en augmentant d'un incrément prédéterminé ou qui compte en diminuant d'un décrément prédéterminé en fonction de l'état de marche respectif du véhicule, et dans lequel le dispositif commande une fermeture de l'embrayage automatique lorsque le compteur atteint ou dépasse un seuil de décision prédéterminé, ou commande une ouverture de l'embrayage automatique lorsque le compteur descend en dessous d'un seuil de décision prédéterminé.

10. Dispositif suivant la revendication 9, **caractérisé en ce que** le compteur est un compteur à cadence temporelle.

11. Dispositif suivant la revendication 9 ou 10, **caractérisé en ce que** le compteur compte en augmentant, lorsque l'état de marche du véhicule est tel qu'il se produise une commande des freins avec ou sans décélération.

12. Dispositif suivant la revendication 11, **caractérisé en ce que** l'incrément prédéterminé pour l'état de commande des freins avec décélération est égal ou différent de celui pour l'état de commande des freins sans décélération.

13. Dispositif suivant la revendication 11 ou 12, **caractérisé en ce que** l'incrément prédéterminé pour l'état de commande des freins avec décélération est inférieur à celui pour l'état de commande des freins sans décélération.

14. Dispositif suivant au moins une des revendications 9 à 13, **caractérisé en ce que** le seuil de décision prédéterminé et/ou le décrément prédéterminé et/ou l'incrément prédéterminé est variable en fonction de la vitesse et/ou en fonction du rapport et/ou en fonction de la pression des freins et/ou en fonction de la vitesse de rotation d'entrée de l'arbre de transmission.

15. Dispositif suivant au moins une des revendications 9 à 14, **caractérisé en ce que** le seuil de décision prédéterminé et/ou le décrément prédéterminé et/ou l'incrément prédéterminé est plus élevé, égal ou plus bas pour des vitesses, des rapports, des pressions de freinage et/ou des vitesses de rotation de l'arbre de transmission plus élevé(e)s que pour des vitesses, des rapports, des pressions de freinage et/ou des vitesses de rotation de l'arbre de transmission plus bas(ses).
